# FASCICULE DE BREVET EUROPEEN

(11) **EP 0 479 691 B1**
(45) Date de publication et mention de la délivrance du brevet: **05.06.1996**
(21) Numéro de dépôt: 91420346.8
(22) Date de dépôt: 01.10.1991
(51) Int. Cl.: G09B 5/10

(54) **Procédé pour materialiser une interactivité virtuelle entre un individu et un support d'informations**
Verfahren zur Durchführung einer virtuellen Interaktivität zwischen einer Person und einem Datenträger
Method for realizing virtual interactivity between an individual and a data carrier

(30) Priorité: 04.10.1990 FR 9012463; 12.04.1991 FR 9104763
(43) Date de publication de la demande: 08.04.1992
(60) Demande divisionnaire: 95117410.1
(73) Titulaire: INFO TELECOM, F-67500 Vendenheim (FR)
(72) Inventeur: Schott, Michel, F-67500 Vendenheim (FR)
(74) Mandataire: Kremer, Robert A.M.

(56) Documents cités:
- GB-A- 2 194 416
- US-A- 4 355 984

## Description

L'invention concerne un procédé et un boîtier, aptes à permettre la réalisation et la matérialisation d'une interactivité virtuelle entre un individu et un support d'informations, tel que par exemple une émission de télévision.

Par "interactivité virtuelle" ou "pseudo-interactivité", on entend une interactivité apparente, non réelle, car ne résultant pas d'un échange d'informations bi-directionnel entre les deux entités entre lesquelles s'établit cette interactivité.

Il devient de plus en plus courant de rencontrer au niveau des différents supports d'informations à la disposition'du public, des animations invitant les lecteurs, auditeurs, spectateurs ou télespectateurs de ces supports d'informations à interagir avec ceux-ci. Pour présenter quelque intérêt, cette interaction doit être en mesure d'arbitrer, de sanctionner voire de corriger les réponses, résultats, et autres choix de l'utilisateur au cours de ces épreuves et autres tests qui lui sont soumis. Ceci est particulièrement vrai dans le cadre de jeux utilisant comme support d'informations une émission télévisée ou radiophonique, au cours de laquelle, différents tests et autres jeux peuvent être proposés, et dont l'intérêt de l'interaction réside dans l'obtention des résultats de ces tests et jeux.

Or, toute interaction réelle suppose obligatoirement l'échange d'informations bi-directionnelles entre le support d'informations et l'utilisateur, de sorte que quels que soient le dispositif et les moyens envisagés pour aboutir à une telle interaction, les coûts de mise en oeuvre s'avèrent systématiquement prohibitifs.

Différents procédés ont été proposés à ce jour afin de permettre la réalisation d'une interaction réelle entre l'utilisateur et le support d'informations, notamment au niveau d'émissions de télévision. On a par exemple proposé d'utiliser un boîtier relié par un câble permettant de transmettre en temps réel les réponses de l'utilisateur au centre concepteur de l'émission.

Dans le document FR-A-2 626 731, on a proposé de réaliser une interaction virtuelle entre un utilisateur et un support d'informations, au moyen d'un dispositif électronique susceptible de capter des signaux émis par un poste de télévision et non décodables voire décelables tant visuellement qu'auditivement par le télespectateur, ces signaux étant destinés à télécharger ce dispositif avec des paramètres propres à chacun des jeux et autres tests proposés dans le cadre d'une émission particulière. De fait, il se crée un couplage particulier entre le récepteur de télévision et le dispositif électronique, ce couplage pouvant être de différente nature, à savoir optique, acoustique, voire électrique. Ce dispositif particulier permet ainsi la réalisation d'une interaction virtuelle entre l'utilisateur et le support d'informations compte tenu, qu'au fur et à mesure du déroulement de l'émission, l'utilisateur peut, par le biais d'un clavier intégré au dispositif, introduire les réponses et autres choix qui lui sont proposés, ces réponses et choix étant contrôlés en local.

Néanmoins, cette méthode d'interaction s'avère lourde à mettre en oeuvre, coûteuse et fastidieuse, de sorte qu'elle est difficilement utilisable. En effet, elle suppose la mise en place de structures de codage appropriées, ainsi que celle d'un récepteur et d'un décodeur au niveau du boîtier de l'utilisateur.

On connaît, dans le document US 4 355 984, un dispositif interactif d'enseignement, comprenant un livre contenant des pages numérotées pourvues de questionnaires à choix multiples, et un module contenant un générateur pseudo aléatoire, ensemencé mécaniquement à partir d'une semence unique définie par des perforations du livre; et activé un nombre de fois égal au numéro de la page considérée.

Ce dispositif éducatif n'offre notamment aucune garantie de sécurité, en particulier quant au détournement éventuel du procédé d'interactivité mis en oeuvre.

L'invention vise à pallier ces inconvénients. Elle propose un procédé apte à permettre la réalisation et la matérialisation d'une interactivité virtuelle entre un support d'informations et un utilisateur. Comme il apparaitra de manière plus explicite ultérieurement, cette interaction, apparemment réelle pour l'utilisateur, ne nécessite plus l'échange d'informations entre celui-ci et le support d'informations, de sorte que toute la lourdeur de mise en oeuvre de telles interactivités s'en trouve supprimée.

Tel que revendiqué, le procédé pour matérialiser une interactivité virtuelle entre d'une part, un utilisateur muni d'un boîtier électronique comprenant un circuit électronique équipé d'un générateur pseudo-aléatoire et un organe d'introduction de données, et d'autre part, un support d'informations proposant au moins une épreuve suggérant des réponses, comprend la génération au niveau du boîtier électronique d'une première suite de chiffres agencée selon une logique pseudo-aléatoire, par le biais du générateur intégré dans ledit circuit électronique, à partir d'au moins une première donnée introduite dans ledit générateur. Cette première suite de chiffres est représentative d'une suite d'informations non accessibles par l'utilisateur, et les réponses suggérées par l'épreuve dudit support d'informations sont corrélées directement ou indirectement avec cette première suite de chiffres. Le procédé comprend également la délivrance au boîtier d'un code externe spécifique de ladite épreuve et fourni par le support d'informations, et la vérification, au sein du boîtier, de la validité du code externe. On transforme une suite de données introduites par l'utilisateur, par le biais de l'organe d'introduction de données, et représentatives des choix et réponses dudit utilisateur à ladite épreuve, sous la forme d'une deuxième suite de chiffres interprétables par rapport à la première suite de chiffres. On compare les deux suites de chiffres au niveau du circuit électronique, et on restitue au niveau du boîtier le résultat de cette comparaison sous la forme de signaux sensoriels.

Telle que revendiquée, l'invention propose également un boîtier électronique permettant la matérialisation d'une interactivité virtuelle entre un utilisateur et un support d'informations proposant au moins une épreuve suggérant des réponses. Ce boîtier comprend un circuit électronique comportant un générateur pseudo-aléatoire et un organe d'introduction de données. Il comprend également des moyens de délivrance d'une première donnée et des moyens de réception d'un code externe, le générateur pseudo-aléatoire générant en réponse au moins à la première donnée, une première suite de chiffres agencée selon une logique pseudo-aléatoire, cette première suite étant représentative d'une suite d'informations non accessibles par l'utilisateur et corrélées directement ou indirectement aux réponses suggérées par l'épreuve dudit support d'informations. Le circuit électronique comprend en outre un microcontrôleur comportant des moyens de validation du code externe reçu, et des moyens de transformation d'une suite de données introduites par l'utilisateur par le biais de l'organe d'introduction de données, sous la forme d'une deuxième suite de chiffres interprétable par rapport à la première suite de chiffres. Ces données introduites par l'utilisateur sont représentatives des choix et réponses de celui-ci. Le dispositif comprend également une section d'arbitrage et de contrôle pour comparer les deux suites de chiffres, et des moyens de restitution du résultat de cette comparaison sous la forme de signaux sensoriels.

En d'autres termes, l'invention permet de générer à partir d'un nombre réduit d'informations et via un générateur pseudo-aléatoire, des données : paramètres, règles, résultats, permettant d'interpréter et d'arbitrer une séquence introduite par l'utilisateur, la suite de données étant initialisée par une donnée commune appelée ensemencement, d'une part à tous les détenteurs du boîtiers électronique, et d'autre part, au support d'informations, afin d'obtenir une unicité au niveau de l'utilisation de cette suite.

Ainsi, connaissant l'algorithme de pseudo-génération identique pour tous les boîtiers électroniques, il devient alors possible, pour le réalisateur de l'émission ou l'éditeur du support d'informations, de prévoir toute sorte d'interaction possible, leur grande diversité étant une conséquence de la quasi-infinité de l'ensemencement du générateur pseudo-aléatoire.

Par ailleurs, l'introduction d'un code externe et la verification de sa validité contribuent à la matérialisation de l'interactivité. On peut ainsi également minimiser le risque de détournement du procédé.

Selon une caractéristique de l'invention, le circuit électronique comporte un moyen de comptage du temps, générant une base de temps destinée à réaliser une information d'horodatage, susceptible de subir un traitement mathématique afin de constituer une donnée introduite dans le générateur. Ce moyen de comptage est avantageusement choisi dans le groupe constitué par un récepteur de signaux horaires radiodiffusés et une horloge interne intégrée dans le boîtier électronique.

Afin de limiter les conséquences d'une dérive temporelle, dont on ne peut s'affranchir totalement, même en utilisant des horloges à quartz, et qui tombe difficilement en dessous de 20 ppm (correspondant à environ dix minutes par an), on découpe avantageusement l'information d'horodatage en intervalles déterminés de grande amplitude. On diminue ainsi le nombre de frontières inter-intervalles, et en conséquence, les possibilités de chevauchement à leur niveau. On conçoit en effet, que lorsque l'information d'horodatage constitue la source d'ensemencement pour une émission donnée, une dérive temporelle trop importante génère une séquence pseudo-aléatoire différente de celle initialement prévue par le concepteur de l'émission, et que l'interaction utilisateur-émission devient faussée. D'autre part, il peut s'avérer que l'utilisation d'une donnée horodatée comme ensemencement ne permette pas de s'accomoder d'un décalage dans la programmation des émissions. Aussi, selon une forme avantageuse de l'invention, les intervalles déterminés sont choisis centrés sur les périodes d'utilisation du boîtier, c'est à dire pendant les périodes préalablement prévues de pseudo-interactivité. De la sorte, on élimine les risques d'interférence qui peuvent s'occasionner aux bornes desdits intervalles.

Dans une variante de l'invention, on prévoit une possibilité d'acquisition d'une donnée externe comme co-ensemencement, introduite au moyen de l'organe d'introduction de données, d'un récepteur de signaux radiodiffusés, ou d'un capteur, notamment acoustique, d'ondes électro-magnétiques, de chocs, de position, de température. De la sorte, on adapte le fonctionnement du boîtier au déroulement d'au moins une épreuve du support d'informations. En outre, cette possibilité permet, lorsque l'ensemencement du générateur pseudo-aléatoire est constitué par une donnée d'horodatage valable pour une période de temps relativement étendue, et par exemple une journée, de néanmoins pouvoir réaliser plusieurs séquences d'interactions pendant cette période. Enfin, l'utilisation d'une donnée externe permet de limiter, voire d'annuler toute possibilité de détournement du procédé de pseudo-interactivité. En effet, l'utilisateur mal intentioné pourrait introduire un certain nombre de codes de manière totalement aléatoire, afin de générer des séries dont il peut faire l'analyse, en vue de détourner l'émission-support.

Dans une forme de réalisation avantageuse du procédé, la donnée externe est composée de deux signaux indépendants :
- un premier signal constitué par une semence proprement dite, et destiné à générer ou à co-générer avec la donnée d'horodatage la séquence pseudo-aléatoire représentatives des paramètres de l'émission considérée,
- et un second signal, destiné à permettre la validation de la séquence ainsi générée et la matérialisation de l'interaction.

On désire ainsi s'affranchir de tout risque de détournement du procédé. En effet, cette seconde partie du signal subit une loi mathématique connue du boîtier électronique, validant automatiquement le code correct, mais rejetant systématiquement tout autre code.

Dans une forme de réalisation de l'invention, on peut introduire une donnée externe de paramétrage au niveau du générateur. Son introduction peut s'effectuer au moyen d'un dispositif choisi dans le groupe comprenant l'organe d'introduction de données, un récepteur de signaux radiodiffusés, un capteur, notamment acoustique, d'ondes électro-magnétiques, de chocs, de position, de température.

Cette donnée externe de paramétrage peut ainsi servir par exemple en cas de report de la diffusion à une date ultérieure d'une émission pré-enregistrée. La donnée externe sert dans ce cas à corriger l'information d'horodatage avant son introduction dans le générateur, afin de le faire coïncider avec la date initiale de diffusion.

Dans une autre variante de l'invention, la donnée externe n'intervient non pas comme co-ensemencement au niveau du générateur pseudo-aléatoire, mais agit au niveau de l'interprétation de la séquence de chiffres issue dudit générateur. De même, cette donnée externe peut agir au niveau de l'interprétation de la suite de données introduites par l'utilisateur dans le boîtier électronique par le biais de l'organe d'introduction de données.

Enfin, cette donnée externe peut également agir comme outil de synchronisation afin d'assurer la correspondance entre le séquencement d'évènement intervenant au niveau du support d'informations, et un séquencement déterminé par une séquence de chiffres issue du générateur pseudo-aléatoire. En effet, certaines applications nécessitent la gestion d'une mise en phase temporelle entre les actions qui se déroulent au niveau du support d'informations et les évènements temporels régis par le générateur du boîtier.

Pour de telles applications, le commencement de l'interaction ne s'effectue que sur injonction d'un signal de synchronisation. Ce signal a pour effet de signaler le départ du chronomètre interne au boîtier, qui devient la base de temps sur laquelle se règlera le déroulement des actions intervenant au niveau du support d'informations ainsi que les évènements temporels régis par le générateur. Cette procédure assure un synchronisme parfait entre le comportement du boîtier et l'émission du support d'informations.

Dans une forme de réalisation particulièrement avantageuse de l'invention, la synchronisation est assurée automatiquement par le biais d'un signal porté par voie hertzienne ou onde radio, et capté par le boîtier électronique, muni alors d'un capteur approprié.

Dans une autre forme de réalisation de l'invention, la synchronisation est assurée par l'utilisateur, par exemple par le biais d'un bouton poussoir associé au boîtier électronique.

Dans une autre forme de réalisation de l'invention, le "top" de synchronisation est défini par l'introduction du code dans le boîtier.

Ainsi, l'invention permet-elle de s'affranchir de tout disfonctionnement inhérent à la dérive temporelle de l'horloge interne que le boîtier peut contenir, est susceptible de permettre la réalisation d'une pluralité d'interactions journalières, et ce sans risque d'un quelconque piratage ou détournement du procédé, et également susceptible de s'accommoder d'une dérive de la programmation des émissions, et pouvant en outre permettre, lorsque cela est nécessaire, le déroulement synchronisé d'une émission.

La manière dont l'invention peut être réalisée et les avantages qui en découlent, ressortiront mieux de l'exemple de réalisation qui suit, donné à titre indicatif et non limitatif à l'appui des figures annexées.

La figure 1 est une représentation schématique du synoptique du fonctionnement du procédé de l'invention.

La figure 2 est une représentation schématique de l'architecture électronique du boîtier utilisé dans le cadre de l'invention.

La figure 3 est une représentation schématique d'un générateur pseudo-aléatoire d'une forme de réalisation particulière de l'invention.

Bien que plus particulièrement décrit en liaison avec un support d'informations constitué par une émission de télévision, par le biais d'un récepteur TV, l'invention ne saurait se limiter à cette seule forme de réalisation, et il va de soi que tout autre support d'informations de ce type, tel que notamment une émission radiophonique, voire un terminal télématique, etc ..., entre dans le champ d'application de l'invention.

Dans le cadre de l'invention, on munit un boîtier électronique destiné à être utilisé par un télespectateur, d'un microcontrôleur dans lequel on intègre une fonction du générateur (1), destiné à générer une suite de signaux, et notamment de chiffres selon une séquence préalable déterminée. Cette suite peut être périodique. Plus spécifiquement, ce générateur gère un algorithme commun à tous les boîtiers utilisés par les différents télespectateurs. Afin d'obtenir une variation au niveau de la séquence de chiffres, il est nécessaire d'introduire au niveau du générateur (1) une donnée initialisatrice, également dénommée semence, qui permet l'activation du générateur et ainsi la délivrance d'une séquence de chiffres. Il est impératif bien entendu que pour une semence donnée, tous les générateurs (1) d'une même série de dispositifs ou de boîtiers délivrent la même séquence et notamment la même séquence de chiffres.

Cette séquence correspond à une suite d'informations codées ; elle est représentative d'un certain nombre d'éléments entrant dans le fonctionnement d'une interactivité virtuelle, plus longuement détaillée ultérieurement. Cette semence peut être de différente nature, mais plus spécifiquement constituée par un nombre, ou un chiffre communiqué pendant l'émission, et par exemple, apparaissant sur l'écran de télévision, voire plus subtilement une information d'horodatage correspondant typiquement au jour de l'instant de fonctionnement du boîtier. Cet horodatage peut être délivré directement par une horloge interne (2) intégrée dans le micro-contrôleur du boîtier électronique. L'horloge peut être calée sur une horloge de référence, servant au producteur de l'émission lors de la création des différentes épreuves et tests. Par ailleurs, compte tenu des dérives possibles de l'horloge sur une longue période de temps, on a avantage à utiliser des intervalles de temps de grande amplitude, afin de garantir une unicité au niveau de la génération pseudo-aléatoire de la séquence de chiffres.

Lorsque l'on fait appel à une semence introduite par l'utilisateur, celle-ci est introduite par le biais d'un clavier (3) intégré également au boîtier électronique.

Ainsi, l'ensemble des différents boîtiers dispose d'un référentiel commun par rapport auquel des comparaisons pourront être effectuées en fonction de données introduites ultérieurement par l'utilisateur, notamment au cours des émissions de télévision dans le cadre de jeux, de tests, etc. .

Corrélativement, le concepteur de l'émission dispose également du même générateur, afin de pouvoir se référer au même référentiel commun à tous les boîtiers électroniques. En d'autres termes, il lui suffit de confectionner une ou différentes épreuves en fonction des réponses et autres suggestions intervenant en cours d'émission, fonction de la séquence pseudo-aléatoire générée par ledit générateur du boîtier électronique.

La séquence de chiffres est donc représentative d'une suite d'informations non accessibles par l'utilisateur et correspondant aux différentes questions sous formes de paramètres, règles et réponses des épreuves à venir en cours d'émission.

Le clavier (3) sert également à l'utilisateur pour introduire une suite de données corespondant aux réponses des questions et autres tests proposés en cours d'émission. Plus précisément, les informations introduites sont tapées en clair sur ledit clavier par le téléspectateur, puis subissent une transformation au niveau du microcontrôleur afin de transférer ces informations sous la forme d'une suite interprétable, par exemple une suite de même nombre que la partie de la suite de chiffres pseudo-aléatoire utilisée. Cette transformation permet d'effectuer ensuite au niveau d'une section d'arbitrage et de contrôle (4) une interprétation (comparaison) de la suite d'informations introduites par l'utilisateur en vue de restituer le résultat du test ou de l'épreuve, par exemple au niveau d'un écran à cristaux liquides (5) intégré dans le boîtier.

En outre, on observe qu'en modifiant la semence de génération de la suite pseudo-aléatoire, il est possible d'obtenir un très grand nombre de suites pseudo-aléatoires, et donc d'augmenter quasiment à l'infini le nombre de possibilités d'une pseudo-interactivité. Il suffit alors au concepteur de l'émission d'adapter les questions et réponses en fonction par exemple de la date programmée de l'émission et de la connaissance de l'algorithme du générateur.

Le téléspectateur n'est pas lui-même conscient de cette interactivité virtuelle, compte tenu qu'il obtient les résultats des tests et autres épreuves auxquels il a participé, ou juste en fin d'émission, selon le type de jeu proposé. C'est la semence introduite dans le générateur qui définit la série de bons résultats, qu'il y aura lieu d'introduire lors de l'émission, les questions étant bien entendu fonction de la connaissance par le concepteur de l'émission de la semence qui va initialiser le générateur et de l'algorithme géré par ce générateur.

De la sorte, on évite ainsi le téléchargement des informations, notamment des paramètres du jeu et autres tests de l'émission, ce qui nécéssite comme déjà dit, d'une part, d'utiliser un système de transmission électrique, optique ou acoustique, et d'autre part, de générér cette information codée à grande vitesse.

Typiquement, le boîtier de l'invention comporte un microcontrôleur (6), alimenté électriquement au moyen par exemple de piles bouton (2). Corrélativement, il reçoit une horloge interne (2) reliée au microcontrôleur, afin de transférer une information d'horodatage comme semence du générateur contenu dans ledit microcontrôleur. Ce dernier est également connecté au clavier (3), d'une part, et à l'organe de restitution sensorielle (5), notamment à un écran à cristaux liquides d'autre part.

Il va être décrit un autre exemple d'application du procédé de l'invention, plus particulièrement destiné aux supports écrits. Ce support écrit peut être constitué d'un hebdomadaire proposant à ses lecteurs un jeu de type intéractif, dont la durée de validité correspond à la semaine d'édition de cet hebdomadaire, et qui s'achève donc à sa parution lors de la semaine suivante (dans l'édition de laquelle il propose un nouveau jeu). Le lecteur dispose du boîtier électronique déjà décrit, dont l'horloge interne donne la date, et dont le microcontrôleur extrait le chiffre correspondant au quantième de la semaine de parution. Ce chiffre va être utilisé par le générateur du microcontrôleur pour paramétrer les bonnes réponses, leur nombre, etc.., et ce, à partir du jour de parution de cet hebdomadaire. Les questions ou tests sont donnés par le journal, le lecteur y répondant successivement en introduisant ses réponses par le clavier du boîtier. A l'issue de cette phase opératoire, le boîtier transmet le résultat de cette épreuve ou test par l'écran à cristaux liquides, ou par le biais d'un synthétiseur de parole. Lors du numéro suivant, c'est à dire, la semaine suivante, la nouvelle semence permet de paramétrer de nouvelles réponses correspondant aux nouvelles questions répertoriées dans le journal.

Une autre application du procédé conforme à l'invention va être maintenant décrite. Cette application concerne un QCM (questionnaire à choix multiples), dont le support peut être télévisuel. L'émission de délévision propose au télespectateur des questions à réponses multiples basées, par exemple sur la présentation d'un clip vidéo. Cet exemple comporte six questions avec un éventail de réponses compris entre 1 et 4. La semence initiant le générateur pseudo-aléatoire, constitué dans le cas présent d'un registre à décalage, provient de l'horodatage interne au boîter électronique de l'utilisateur.

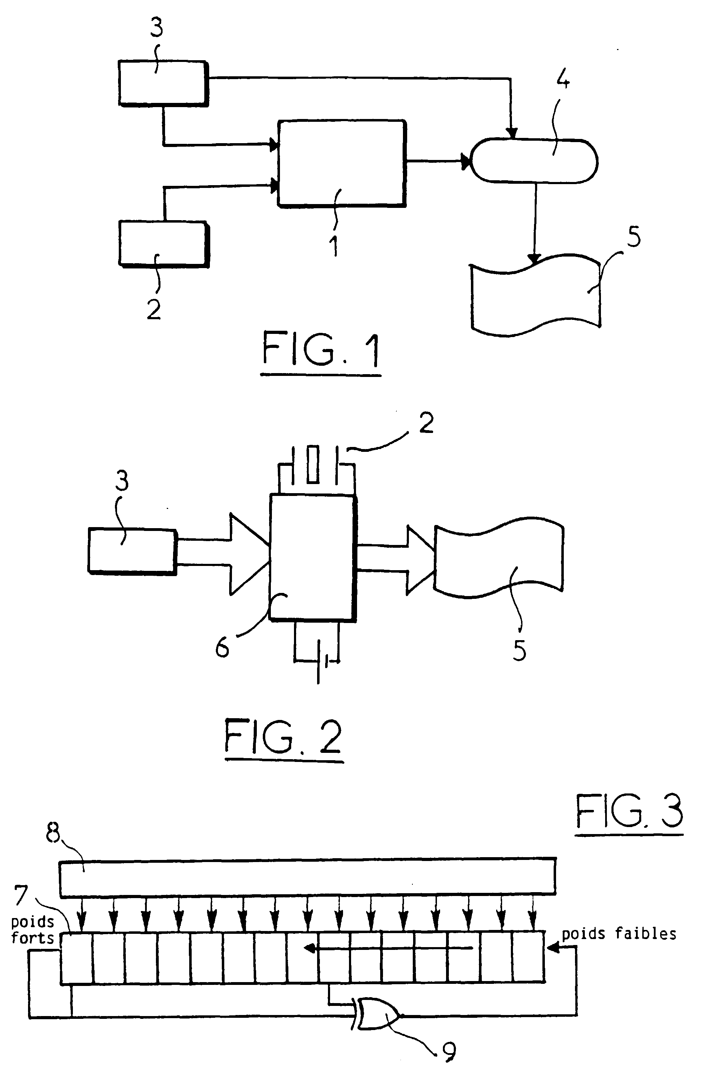

Le registre à décalage a été représenté par la référence générale (7) dans la figure 3. Il est réalisé au moyen d'une fonction cablée, mais il est clair que sa réalisation pourrait être obtenue par une logique programmée. Il est connecté à un organe d'horodatage (8), et deux de ses sorties sont reliées à une porte logique OU exclusif (9), dont la sortie est elle-même connectée à l'entrée dudit registre.

La fonction horodatage est introduite sous forme binaire codée décimale, par transformation du quantième de l'année en binaire, en affectant arbitrairement la valeur d'une unité à un jour plein.

Par exemple, le Mardi 27 Novembre 1990, c'est à dire le 331ème jour de l'année peut être représenté en binaire par le nombre :

| | | | |
|---|---|---|---|
| 0 | 3 | 3 | 1 |
| 000 | 0011 | 0011 | 0001 |

En chargeant le registre à décalage, décrit ci-dessus, et en effectuant plusieurs itérations, on obtient la suite de valeurs binaires répertoriées dans le tableau ci-dessous.

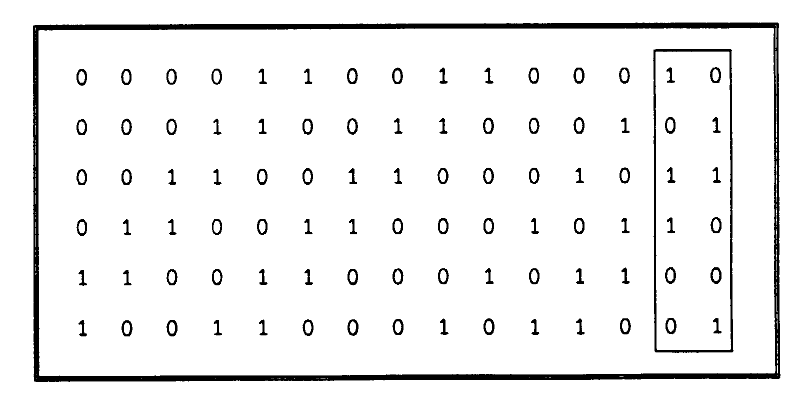

En affectant la valeur du registre (ou une partie) de chaque itération aux réponses aux questions du jeu, on peut ainsi obtenir, pour un jeu composé de six questions de type QCM, dont chacune d'entre elles propose un éventail de quatre réponses possibles comprises entre 1 et 4, les valeurs suivantes :

| | |
|---|---|
| Question 1 | Bonne réponse : 3 |
| 2 | 2 |
| 3 | 4 |
| 4 | 3 |
| 5 | 1 |
| 6 | 2 |

Pour ce faire, on utilise par exemple, dans le cas présent, les deux bits de poids faible, c'est à dire correspondant aux deux colonnes de droite encadrées dans le tableau ci-dessus. On obtient ainsi des valeurs binaires comprises entre 0 0 et 1 1, c'est à dire entre 0 et 3, qu'il suffit d'augmenter d'une unité pour obtenir un intervalle compris entre 1 et 4.

Connaissant ce résultat, suite aux itérations du registre à décalage, le préparateur du jeu n'a plus qu'à prévoir les questions en tenant compte des résultats donnés par le générateur.

Le téléspectateur introduit sa propre séquence de réponses, qui sera comparée à la séquence clé référence, à savoir 3-2-4-3-1-2, et ce :
- soit pas à pas, et dans ce cas le téléspectateur est informé après chaque question, en temps réel, de l'exactitude ou du caractère erroné de sa réponse, par un affichage de type à cristaux liquides,
- soit dans sa totalité, à la fin du jeu, de manière facultative, il pourra lui être affiché son score, toujours par le biais d'un afficheur à cristaux liquides.

En outre, un délai de réponse pour chacune des questions peut être introduit, pour paramétrer le jeu,et cela en exploitant différemment la suite de valeurs binaires déterminée par le registre à décalage.

Selon une première variante de l'invention, la semence d'horodatage introduite dans le générateur est associée avec une semence introduite par l'utilisateur sous forme codée. La donnée horodatée, et par exemple le jour, induit au niveau du générateur (1), et comme dans le cas précédent, une séquence pseudo-aléatoire de chiffres, selon un algorithme commun à tous les boîtiers électroniques et connu par le concepteur de l'émission de télévision. Ce dernier, connaissant en outre la semence initialisatrice, en l'occurence le jour de programmation de l'émission, est à même de réaliser toute sorte de jeux, tests, etc ... , qui ne seront valables que durant cette journée.

En outre, lors du commencement de l'émission considérée, le présentateur indique un code spécifique à introduire dans le boîtier, par le biais du clavier, destiné à être comparé en interne, aux codes des émissions possibles désignés pour la journée considérée et définis par la séquence pseudo-aléatoire générée par la donnée d'horodatage. De la sorte, si une correspondance peut être détectée, l'émission peut se dérouler avec le caractère interactif. En revanche, en l'absence de correspondance, un nombre déterminé de tentatives est permis à l'utilisateur à l'issue duquel il est immanquablement rejeté pour une durée déterminée.

Compte tenu que la génération des codes spécifiques des émissions pour une période considérée, à savoir pour une journée, sont indexés sur la donnée d'horodatage, ils varient tous les jours. De la sorte, il devient particulièrement difficile de détourner le procédé d'interaction.

Dans une autre forme particulièrement avantageuse de l'invention, le code introduit par l'utilisateur sur proposition du présentateur comporte lui-même deux informations :
- une première information est associée à la donnée d'horodatage, afin d'induire au niveau du boîtier, la génération d'une séquence pseudo-aléatoire correspondant non seulement à des émissions définies, mais en outre, au paramétrage des caractéristiques d'une émission bien définie ;
- une seconde information correspond comme dans le cas précédent à une clé électronique, destinée à vérifier la validité du code, par exemple au moyen d'une loi mathématique connue du boîtier.

De la sorte, on optimise le nombre de possibilités d'interactions au cours d'une même période de validité d'une séquence pseudo-aléatoire de base.

Pour les applications nécessitant un synchronisme rigoureux, voire parfait entre le comportement du boîtier et l'émission du support d'informations, on associe au boîtier, selon l'une des caractéristiques de l'invention, un organe apte à assurer cette synchronisation.

Cet organe de synchronisation peut être constitué par un simple bouton-poussoir intégré dans le boîtier électronique, actionné par l'utilisateur au moment indiqué par l'animateur, par exemple, de l'émission de télévision.

Dans une autre forme de réalisation de l'invention, ce top de synchronisation est transmis automatiquement au boîtier au moyen d'une onde porteuse, et typiquement un signal hertzien, une onde radio, voire un signal lumineux ou sonore. Ce boîtier électronique est alors muni d'un récepteur approprié, apte à transmettre au circuit électronique, le top de synchronisation. Dans une variante, le boîtier muni d'un microphone, est à même de reconnaître une mélodie ou un "jingle" précédent l'émission. On pourrait également concevoir la transmission de ce top sous la forme d'un signal électrique porté par le signal TV, le boîtier étant alors relié électriquement au récepteur de télévision.

Ce "Top" de synchronisation peut en outre être constitué par la simple introduction du code par l'utilisateur par le biais du clavier (3).

Cette synchronisation étant réalisée, on fixe ainsi le temps origine t₀ du départ de l'interactivité. Le jeu ou le test (ou analogue) peut alors démarrer, l'utilisateur utilisant le clavier (3) comme organe d'introduction de données, c'est-à-dire, comme organe d'introduction des réponses qui lui sont soumises. Plus précisément, les informations introduites sont tapées en clair sur le clavier par le télespectateur, puis subissent une transformation au niveau du microcontrôleur afin de transférer ces informations sous la forme d'une suite interprétable, par exemple une suite de chiffres de même nombre que la partie de la suite périodique utilisée. En d'autres termes, cette transformation permet d'effectuer ensuite au niveau d'une section d'arbitrage et de contrôle (4) une interprétation (comparaison) de la suite d'informations introduites par l'utilisateur en vue de restituer le résultat du test ou de l'épreuve, par exemple au niveau d'un écran à cristaux liquides (5) intégré dans le boîtier. Cette restitution peut donc s'effectuer en temps réel, directement sans pour autant avoir recours à une interactivité réelle entre l'émission de télévision et le boîtier de l'utilisateur.

Il va être décrit ci-après un exemple pratique d'une application du procédé conforme à l'invention. Un télespectateur possède un sifflet intégrant le circuit électronique décrit précédemment. En d'autres termes, le boîtier électronique est constitué par le sifflet proprement dit. Sur le récepteur de télévision défile un film, au sein duquel une automobiliste circule dans une agglomération et commet des infractions. Le télespectateur est invité à signaler chacune de ces infractions en sifflant. Cette action de siffler, hormis l'aspect purement sensoriel, génère un signal d'entrée interprété par le circuit électronique comme une donnée introduite par le télespectateur, et destinée à être comparée avec la suite pseudo-aléatoire générée, par exemple suite à un top de synchronisation consécutif à l'introduction dans le boîtier du code de validation de la séquence pseudo-aléatoire par l'utilisateur. S'il siffle correctement, on peut prévoir d'associer au sifflet un écran à cristaux liquides qui matérialise les coups de sifflet corrects. On peut également prévoir de matérialiser en fin de jeu le relevé des différentes réponses apportées par le téléspectateur.

Les différents intervalles de temps séparant deux réponses successives, sont préalablement prévus par la génération pseudo-aléatoire, et utilisés par le concepteur de l'émission.

La donnée externe peut également être utilisée pour modifier l'interprétation des données introduites par l'utilisateur. Par exemple, dans le cadre d'un jeu, le joueur doit atteindre une valeur déterminée par le générateur. Il rentre dans le boîtier une série limitée de nombres, qui subit un traitement mathématique déterminé, par exemple une addition, dont le résultat est comparé à la valeur déterminée à atteindre. Dans une version évoluée de cette application, le générateur génère également une fourchette à l'intérieur de laquelle doit se situer le résultat du traitement pour gagner, permettant ainsi de renseigner le joueur dès la fin du jeu de son score. En outre, ce type de jeu peut être couplé avec un serveur central, au niveau duquel sont enregistrés les scores des différents joueurs, afin d'établir une hierarchie, et donc un gagnant.

On observe donc que le procédé conforme à l'invention permet d'aboutir à une interactivité virtuelle, dont la mise en oeuvre se trouve simplifiée de par la synchronisation systématique que l'on peut prévoir.

Ce procédé est donc particulièrement adapté à tous les systèmes interactifs, et plus particulièrement à de tels systèmes dans lesquels le support de l'interaction est constitué par une émission télévisée ou radiophonique.

## Revendications

1. Procédé pour matérialiser une interactivité virtuelle entre d'une part, un utilisateur muni d'un boîtier électronique comprenant un circuit électronique équipé d'un générateur pseudo-aléatoire (1) et un organe d'introduction de données (3), et d'autre part, un support d'informations proposant au moins une épreuve suggérant des réponses, dans lequel
- on génère au niveau du boîtier électronique une première suite de chiffres agencée selon une logique pseudo-aléatoire, par le biais du générateur (1) intégré dans ledit circuit électronique, à partir d'au moins une première donnée introduite dans ledit générateur, cette première suite de chiffres étant représentative d'une suite d'informations non accessibles par l'utilisateur, les réponses suggérées par l'épreuve dudit support d'informations étant corrélées directement ou indirectement avec cette première suite de chiffres ;
- on délivre au boîtier un code externe spécifique de ladite épreuve et fourni par le support d'informations,
- on vérifie, au sein du boîtier, la validité du code externe,
- on transforme une suite de données introduites par l'utilisateur, par le biais de l'organe (3) d'introduction de données, et représentatives des choix et réponses dudit utilisateur à ladite épreuve, sous la forme d'une deuxième suite de chiffres interprétables par rapport à la première suite de chiffres ;
- on compare les deux suites de chiffres au niveau du circuit électronique ; et
- on restitue au niveau du boîtier le résultat de cette comparaison sous la forme de signaux sensoriels.

2. Procédé selon la revendication 1, caractérisé par le fait que la première donnée est une donnée dite d'horodatage issue d'une information d'horodatage.

3. Procédé selon la revendication 2, caractérisé par le fait que la première suite de chiffres générée à partir de la donnée d'horodatage définit des codes d'épreuves possibles, et par le fait qu'on vérifie la validité du code externe en comparant en interne le code externe spécifique aux codes possibles ainsi définis.

4. Procédé selon la revendication 1 ou 2, caractérisé par le fait qu'on génère la première suite de chiffres à partir de ladite première donnée et d'une partie du code externe.

5. Procédé selon la revendication 4, caractérisé par le fait que le code externe comporte une première information et une deuxième information, et par le fait que l'on génère la première suite de chiffres à partir de ladite première donnée et de ladite première information tandis que l'on vérifie la validité du code externe en utilisant la deuxième information.

6. Procédé selon l'une des revendications 2 à 5, caractérisé par le fait que l'information d'horodatage est délivrée par une horloge (2) interne au boîtier ou par l'intermédiaire d'une réception de signaux radiodiffusés.

7. Procédé selon la revendication 6, caractérisé en ce que l'information d'horodatage est obtenue en découpant le temps en intervalles déterminés, de grande amplitude.

8. Procédé selon la revendication 7, caractérisé en ce que les intervalles déterminés sont choisis centrés sur les périodes d'utilisation du boîtier.

9. Procédé selon l'une des revendications 1 à 8, caractérisé par le fait qu'on introduit une donnée externe de paramétrage au niveau du générateur (1).

10. Procédé selon l'une des revendications 1 à 8, caractérisé en ce que l'on introduit dans le boîtier une donnée externe et on transforme ladite première suite de chiffres en utilisant ladite donnée externe, préalablement à son traitement comparatif avec la deuxième suite de chiffres.

11. Procédé selon l'une des revendications 1 à 8, caractérisé en ce que l'on introduit dans le boîtier électronique une donnée externe et on transforme ladite deuxième suite de chiffres en utilisant ladite donnée externe, préalablement à son traitement comparatif avec la première suite de chiffres.

12. Procédé selon l'une des revendications précédentes, caractérisé en ce que l'on introduit une donnée externe dans le boîtier électronique, qui agit comme signal de synchronisation afin d'assurer la correspondance entre le séquencement d'événements intervenant au niveau du support d'informations, et un séquencement déterminé par la première suite de chiffres issue du générateur pseudo-aléatoire.

13. Procédé selon l'une des revendications 9 à 12, caractérisé par le fait que la donnée externe est introduite dans le boîtier par l'intermédiaire de l'organe (3) d'introduction de données ou par l'intermédiaire d'une réception de signaux radiodiffusés.

14. Procédé selon l'une des revendications précédentes, caractérisé par le fait que le code externe est introduit dans le boîtier par l'intermédiaire de l'organe (3) d'introduction de données ou par l'intermédiaire d'une réception de signaux radiodiffusés.

15. Procédé selon l'une des revendications précédentes, caractérisé par le fait que le support d'informations est une émission télévisée ou radiophonique.

16. Boîtier électronique permettant la matérialisation d'une interactivité virtuelle entre un utilisateur et un support d'informations proposant au moins une épreuve suggérant des réponses, comprenant un circuit électronique comportant un générateur pseudo-aléatoire (1), et un organe d'introduction de données (3), des moyens (2) de délivrance d'une première donnée et des moyens (3) de réception d'un code externe, le générateur pseudo-aléatoire (1) générant en réponse au moins à la première donnée, une première suite de chiffres agencée selon une logique pseudo-aléatoire, cette première suite étant représentative d'une suite d'informations non accessibles par l'utilisateur et corrélées directement ou indirectement aux réponses suggérées par l'épreuve dudit support d'informations, le circuit électronique comprenant en outre un microcontrôleur comportant des moyens de validation du code externe reçu, et des moyens de transformation d'une suite de données introduites par l'utilisateur par le biais de l'organe (3) d'introduction de données, et représentatives des choix et réponses de celui-ci, sous la forme d'une deuxième suite de chiffres interprétables par rapport à la première suite de chiffres, ainsi qu'une section d'arbitrage et de contrôle (4) pour comparer les deux suites de chiffres, et le boîtier comprenant en outre des moyens (5) de restitution du résultat de cette comparaison sous la forme de signaux sensoriels.

17. Boîtier selon la revendication 16, caractérisé par le fait que les moyens de réception du code externe comportent l'organe d'introduction de données (3) connecté au microcontrôleur.

18. Boîtier selon la revendication 16 ou 17, caractérisé par le fait que les moyens de délivrance de la première donnée comportent une horloge interne (2) délivrant une information d'horodatage.

19. Boîtier selon l'une des revendications 16 à 18, caractérisé par le fait qu'il comprend un récepteur de signaux radiodiffusés incorporant les moyens de réception du code externe et/ou les moyens de délivrance de la première donnée.

20. Boîtier selon l'une des revendications 16 à 19, caractérisé par le fait que le générateur pseudo-aléatoire (1) est relié aux moyens (2) de délivrance de la première donnée et aux moyens de réception (3) du code externe de façon à générer ladite première suite de chiffres en réponse à la première donnée et à une partie du code externe reçu, et par le fait que le microcontrôleur (6) est relié aux moyens de réception du code externe de façon à effectuer le traitement de validation du code externe en utilisant une autre partie du code externe.

## Patentansprüche

1. Verfahren zum Ausführen einer virtuellen Interaktion zwischen einerseits einem Benutzer, der mit einem elektronischen Gerät versehen ist, das eine mit einem Pseudorandom-Generator (1) ausgestattete elektronische Schaltung und eine Dateneingabeeirichtung (3) aufweist, und einer Informationsquelle andererseits, die wenigstens einen Antworten erwartenden Test/Fragespiel anbietet, wobei
- auf Seiten des elektronischen Gerätes vermittels des in der elektronischen Schaltung integrierten Generators (1) ausgehend von ersten in den Generator eingegebenen Daten eine erste Folge von Zahlen erzeugt wird, die gemäß einer Pseudorandom-Logik aufeinanderfolgen, wobei diese erste Zahlenfolge für eine durch den Benutzer nicht zugängliche Informationsfolge kennzeichnend ist und die Antworten, die von dem durch die Informationsquelle angebotenen Test/Fragespiel erwarteten werden, unmittelbar oder undirekt mit dieser ersten Zahlenfolge korreliert sind;
- an das Gerät ein externer Code geliefert wird, der für den Test/Fragespiel spezifisch ist und durch die Informationsquelle bereitgestellt wird,
- auf Seiten des Gerätes die Gültigkeit des externen Codes verifiziert wird,
- eine Folge von Daten, die durch den Benutzer vermittels der Dateneingabeeinrichtung (3) eingegeben wurden und die für die Auswahlen und die Antworten des Benutzers auf den Test/Fragespiel kennzeichnend sind, in eine zweiten Zahlenfolge umgewandelt wird, die bezüglich der ersten Zahlenfolge interpretierbar sind;
- die beiden Zahlenfolgen in der elektronischen Schaltung verglichen werden und
- in dem Gerät das Ergebnis in Form von wahrnehmbaren Signalen wiedergegeben wird.

2. Verfahren nach Anspruch 1, dadurch gekennzeichnet, daß die ersten Daten Daten sind, die als Zeit-/Datumsangaben bezeichnet sind, die aus einer Zeit-/Datuminformation hervorgegangen sind.

3. Verfahren nach Anspruch 2, dadurch gekennzeichnet, daß die erste Zahlenfolge, die ausgehend von der Zeit-/Datumsangabe erzeugt wurde, die möglichen Codes des Tests/Fragespiels definiert und daß die Gültigkeit des externen Codes verifiziert wird, indem intern der spezielle externe Code mit den so definierten möglichen Codes verglichen wird.

4. Verfahren nach den Ansprüchen 1 oder 2, dadurch gekennzeichnet, daß ausgehend von den ersten Daten und einem Teil des externen Codes die erste Zahlenfolge erzeugt wird.

5. Verfahren nach Anspruch 4, dadurch gekennzeichnet, daß der externe Code eine erste und eine zweite Information trägt und daß ausgehend von den ersten Daten und der ersten Information die erste Zahlenfolge erzeugt wird, wobei die Gültigkeit des externen Codes unter Verwendung der zweiten Information verifiziert wird.

6. Verfahren nach einem der Ansprüche 2 bis 5, dadurch gekennzeichnet, daß die Zeit-/Datumsinformation von einer geräteinternen Uhr (2) oder unter Verwendung des eines empfangenen Rundfunksignals abgegeben wird.

7. Verfahren nach Anspruch 6, dadurch gekennzeichnet, daß die Zeit-/Datumsinformation erhalten wird, indem die festgelegte Zeit in Intervalle mit großer Dauer unterteilt wird.

8. Verfahren nach Anspruch 7, dadurch gekennzeichnet, daß die festgelegten Intervalle mittig bezüglich der Intervalle der Benutzung des Gerätes gewählt sind.

9. Verfahren nach einem der Ansprüche 1 bis 8, dadurch gekennzeichnet, daß in den Generator (1) externe Parameter eingegeben werden.

10. Verfahren nach einem der Ansprüche 1 bis 8, dadurch gekennzeichnet, daß in das Gerät externe Daten eingegeben werden und vor der Durchführung des Vergleichs mit der zweiten Zahlenfolge die erste Zahlenfolge unter Verwendung der externen Daten transformiert wird.

11. Verfahren nach einem der Ansprüche 1 bis 8, dadurch gekennzeichnet, daß in das elektronische Gerät externe Daten eingegeben werden und vor der Durchführung des Vergleichs mit der zweiten Zahlenfolge die erste Zahlenfolge unter Verwendung der externen Daten transformiert wird.

12. Verfahren nach einem der vorhergehenden Ansprüche, dadurch gekennzeichnet, daß in das elektronische Gerät externe Daten eingegeben werden, die als Synchronisationssignal dienen, um die Korrespondenz zwischen der Sequenzierung der Ereignisse, die von der Informationsquelle kommen, und einer Sequenz sicherzustellen, die durch die erste Zahlenfolge festgelegt ist, die von dem den Pseudorandom-Generator stammt.

13. Verfahren nach einem der Ansprüche 9 bis 12, dadurch gekennzeichnet, daß die externen Daten mittels der Dateneingabeeinrichtung (3) oder mittels eines Empfangs von Radiosignalen in das Gerät eingegeben werden.

14. Verfahren nach einem der vorhergehenden Ansprüche, dadurch gekennzeichnet, daß der externe Code mittels der Dateneingabeeinrichtung (3) oder mittels eines Empfangs von Radiosignalen in das Gerät eingegeben werden.

15. Verfahren nach einem der vorhergehenden Ansprüche, dadurch gekennzeichnet, daß die Informationsquelle eine Radio- oder Fernsehsendung ist.

16. Elektronisches Gerät zum Ausführen einer virtuellen Interaktion zwischen einem Benutzer und einer Informationsquelle, die wenigstens einen Antworten erwartenden Test/Fragespiel anbietet,
mit einer einen Pseudorandom-Generator (1) sowie eine aufweisenden elektronischen Schaltung, mit einer Dateneingabeeinrichtung (3),
mit Mitteln (2) zum Ausgeben von ersten Daten und mit Mitteln (3) zum Aufnehmen eines externen Codes,
wobei der Pseudorandom-Generator (1) als Antwort auf wenigstens erste Daten eine erste Folge von Zahlen ausgibt, die gemäß einer Pseudorandom-Logik aufeinanderfolgen, und diese erste Folge für eine Folge von Informationen kennzeichnend ist, die für den Benutzer nicht zugänglich sind und unmittelbar oder indirekt mit den Antworten korreliert sind, die von dem durch die Informationsquelle angebotenen Test/Fragespiel erwartet werden,
wobei die elektronische Schaltung ferner Mikroprozessor, der Mittel zum Validieren des empfangenen externen Codes aufweist, und Mittel, um die eine Datenfolge, die unter Verwendung der Dateneingabeeinrichtung (3) seitens des Benutzers eingegeben wurden und die für die dessen Auswahlen oder dessen Antworten kennzeichnend sind, in eine zweite Folge von Zahlen umzuwandeln, die unter Bezug auf die erste Zahlenfolge interpretierbar sind, sowie eine Entscheidungs- und Steuerabschnitt (4) enthält, um die beiden Zahlenfolgen zu vergleichen,
wobei das Gerät ferner Mittel (5) enthält, um das Ergebnis des Vergleiches in Form wahrnehmbarer Signale wiedergibt.

17. Gerät nach Anspruch 16, dadurch gekennzeichnet, daß zu den Mitteln zum Empfangen des externen Codes die an den Mikroprozessor angeschlossene Dateneingabeeinrichtung (3) gehört.

18. Gerät nach Anspruch 16 oder 17, dadurch gekennzeichnet, daß zu den Mitteln zur Ausgabe der ersten Daten eine interne Uhr (2) gehört, die eine Zeit-/Datumsinformation liefert.

19. Gerät nach einem der Ansprüche 16 bis 18, dadurch gekennzeichnet, daß es einen Empfänger für Radiosignale aufweist, der Mittel zum Empfang des externen Codes und/oder Mittel zum Ausgeben der ersten Daten bildet.

20. Gerät nach einem der Ansprüche 16 bis 19, dadurch gekennzeichnet, daß der Pseudorandom-Generatort (1) mit den Mittel (2) zur Ausgabe der ersten Daten und mit den Empfangsmittel für den externen Code derart verbunden ist, daß er die erste Zahlenfolge in Abhängigkeit von den ersten Daten und einem Teil des empfangenen externen Codes erzeugt, und daß der Mikroprozessor (6) mit den Empfangsmittel für den externen Code derart verbunden ist, daß er eine Validierung des externen Codes unter Verwendung des anderen Teils des externen Codes bewirkt.

## Claims

1. Method for realizing virtual interactivity between on the one hand, a user furnished with an electronic box comprising an electronic circuit equipped with a pseudo-random generator (1) and a data entry facility (3), and on the other hand, an information carrier proposing at least one quiz suggesting answers, in which
- a first string of digits arranged according to pseudo-random logic is generated at the level of the electronic box via the generator (1) built into the said electronic circuit, starting from at least one first datum entered into the said generator, this first string of digits being representative of a string of information items which cannot be accessed by the user, the answers suggested by the quiz of the said information carrier being correlated directly or indirectly with this first string of digits;
- an external code specific to the said quiz and provided by the information carrier is delivered to the box,
- the validity of the external code is checked, within the box,
- a string of data entered by the user, via the data entry facility (3), and representative of the choices and answers of the said user to the said quiz is transformed into the form of a second string of digits which can be interpreted with respect to the first string of digits;
- the two strings of digits are compared at electronic circuit level; and
- the result of this comparison is restored at box level in the form of sensory signals.

2. Method according to Claim 1, characterized in that the first datum is a so-called date and time datum arising from a date and time information item.

3. Method according to Claim 2, characterized in that the first string of digits generated from the date and time datum defines possible quiz codes, and in that the validity of the external code is checked by internally comparing the specific external code with the possible codes thus defined.

4. Method according to Claim 1 or 2, characterized in that the first string of digits is generated from the said first datum and from part of the external code.

5. Method according to Claim 4, characterized in that the external code includes a first information item and a second information item, and in that the first string of digits is generated from the said first datum and from the said first information item whereas the validity of the external code is checked using the second information item.

6. Method according to one of Claims 2 to 5, characterized in that the date and time information item is delivered by a clock (2) internal to the box or by way of reception of radio broadcast signals.

7. Method according to Claim 6, characterized in that the date and time information item is obtained by slicing the time into specified intervals, of large amplitude.

8. Method according to Claim 7, characterized in that the specified intervals are chosen centred on the periods of use of the box.

9. Method according to one of Claims 1 to 8, characterized in that an external parametrization datum is entered at generator (1) level.

10. Method according to one of Claims 1 to 8, characterized in that an external datum is entered into the box and the said first string of digits is transformed using the said external datum, prior to its comparative processing with the second string of digits.

11. Method according to one of Claims 1 to 8, characterized in that an external datum is entered into the electronic box and the said second string of digits is transformed using the said external datum, prior to its comparative processing with the first string of digits.

12. Method according to one of the preceding claims, characterized in that an external datum is entered into the electronic box, which acts as synchronization signal so as to ensure the correspondence between the sequencing of events occurring at information carrier level, and a sequencing determined by the first string of digits arising from the pseudo-random generator.

13. Method according to one of Claims 9 to 12, characterized in that the external datum is entered into the box by way of the data entry facility (3) or by way of reception of radio broadcast signals.

14. Method according to one of the preceding claims, characterized in that the external code is entered into the box by way of the data entry facility (3) or by way of reception of radio broadcast signals.

15. Method according to one of the preceding claims, characterized in that the information carrier is a televised or radiophonic transmission.

16. Electronic box allowing the realization of virtual interactivity between a user and an information carrier proposing at least one quiz suggesting answers, comprising an electronic circuit including a pseudorandom generator (1), and a data entry facility (3), means (2) of delivery of a first datum and means (3) of reception of an external code, the pseudo-random generator (1) generating in answer to at least the first datum, a first string of digits arranged according to pseudo-random logic, this first string being representative of a string of information items which cannot be accessed by the user and are correlated directly or indirectly with the answers suggested by the quiz of the said information carrier, the electronic circuit furthermore comprising a microcontroller including means of validation of the external code received, and means of transformation of a string of data entered by the user via the data entry facility (3), and representative of the latter's choices and answers, in the form of a second string of digits which can be interpreted with respect to the first string of digits, as well as an arbitration and control section (4) for comparing the two strings of digits, and the box furthermore comprising means (5) of restoration of the result of this comparison in the form of sensory signals.

17. Box according to Claim 16, characterized in that the means of reception of the external code include the data entry facility (3) connected to the microcontroller.

18. Box according to Claim 16 or 17, characterized in that the means of delivery of the first datum include an internal clock (2) delivering a date and time information item.

19. Box according to one of Claims 16 to 18, characterized in that it comprises a receiver of radio broadcast signals incorporating the means of reception of the external code and/or the means of delivery of the first datum.

20. Box according to one of Claims 16 to 19, characterized in that the pseudo-random generator (1) is linked to the means (2) of delivery of the first datum and to the means of reception (3) of the external code so as to generate the said first string of digits in answer to the first datum and to part of the external code received, and in that the microcontroller (6) is linked to the means of reception of the external code in such a way as to perform the validation processing of the external code using another part of the external code.
